# EUROPEAN PATENT APPLICATION

(11) **EP 1 519 295 A1**
(43) Date of publication of application: **30.03.2005**
(21) Application number: 02736209.4
(22) Date of filing: 28.06.2002
(51) Int. Cl.: G06K 7/00

(54) **BAR CODE READING APPARATUS AND BAR CODE READING PROGRAM**

(71) Applicant: FUJITSU LIMITED, Kawasaki-shi, Kanagawa 211-8588 (JP); Fujitsu Frontech Limited, Inagi-shi, Tokyo 206-8555 (JP)
(72) Inventor: IWAGUCHI, Isao, Inagi-shi, Tokyo 206-8555 (JP); YAMAZAKI, Kozo, Inagi-shi, Tokyo 206-8555 (JP)
(74) Representative: Körfer, Thomas, Dipl.-Phys.
(86) International application number: PCT/JP2002/006650
(87) International publication number: WO 2004/003828

(57) **Abstract**

A reading section that reads characters from a bar code (10), based on parameters, a learning-information database (60) that stores a plurality of pattern-waveform information corresponding to characters of a plurality of patterns as learning information, a character selector (40) that makes an operator select a correct-reading character from among a plurality of characters when there is an occurrence of a wrong reading of characters, a parameter-setting section (37) that compares a correct-reading ternarized pattern corresponding to the correct-reading character pattern that is selected and a ternarized pattern that is acquired from a plurality of learning information while changing the parameters one by one, and based on a comparison result sets in BPF (27) parameters for which the occurrence of wrong reading is the least, are provided.

## Description

### TECHNICAL FIELD

The present invention relates to a bar-code reader that reads a bar code (characters) based on light reflected from the bar code (binary information) in which characters are expressed by bar width by using a difference in reflectance of light and a computer program for reading bar code, in particular to a bar-code reader that enables to improve an accuracy of bar-code reading by a learning function of parameters and a computer program for reading bar code.

### BACKGROUND ART

So far, in a field of distribution of products, a bar-code that is provided on a product is read optically and information related to the product such as a price and a name of the product is recorded in a register.

In a bar code, information related to a product is encoded as characters and is combined as alternate black and white bars. In a bar-code reader, beam light that is emitted from a laser diode is made to scan the bar code, reflected light of the beam is received, and bar-code information is read from an electric signal corresponding to width of black bars and white bars.

In this case, the bar code is printed on various media such as an organic material, a can, and mainly a paper. Therefore, conventionally, at a time of printing of the bar code, there has been an error in width of bars depending on the medium, contamination during distribution, and an error in width due to blurring. In a case of such a bar code that has the errors in width, there is an occurrence of wrong reading by the bar-code reader.

Therefore, in a manufacturing factory of the bar-code reader, the bar-code reader is shipped from the factory in a condition with a tolerance such that setting conditions of parameters necessary for reading the bar-code for width error that is within specifications, are relaxed.

However, conventionally, after the shipment of the bar-code reader, there have been frequent appearances of inferior bar codes which have width error that is out of specifications. In such a case, since the bar-code cannot be read no matter for how long it is read, an operator has to input bar-code information and it takes too much of operation time, which has been a problem.

Moreover, if the frequency of inability to read the inferior bar code increases, a complaint is made by a user of the bar-code reader to a manufacturer and the manufacturer has to send a person-in-charge to a site who has to investigate and take measures or to bring the bar-code reader to the manufacturer and carry out thorough investigation and take measures, thereby causing a demerit to both the user and the manufacturer, which was a problem.

The present invention is made in view of the abovementioned problems with an object of providing a bar-code reader and a computer program for reading bar code that enable to improve the reading accuracy automatically.

### DISCLOSURE OF THE INVENTION

To achieve the above objectives, a bar-code reader according to the present invention includes a reading unit that reads characters from a bar code, based on parameters, a storing unit that stores a plurality of signal-waveform information corresponding to a plurality of character patterns, a selecting unit that makes an operator select a correct-reading character from among a plurality of characters, when there is an occurrence of wrong reading, a comparing unit that compares a pattern corresponding to the correct-reading character selected and a pattern acquired from a plurality of signal-waveform information while changing the parameters one by one, and a parameter-setting unit that sets in the reading unit, the parameters for which the occurrence of the wrong reading is least, based on a comparison result of the comparing unit.

Moreover, a computer program according to the present invention makes a computer function as a bar-code reader and makes the computer execute reading characters from a bar code, based on parameters, storing a plurality of signal-waveform information corresponding to a plurality of character patterns, a selecting that includes making an operator select a correct-reading character from among a plurality of the characters, when there is an occurrence of a wrong reading, comparing a pattern corresponding to the correct-reading character selected and a pattern acquired from a plurality of signal-waveform information while changing the parameters one by one, and setting in a reading unit, the parameters for which the occurrence of wrong reading is least, based on a comparison result of the comparing.

Thus as described above, according to the present invention, when there is an occurrence of wrong reading of characters of a bar code, the operator is made to select the correct-reading character from the plurality of characters. Because the pattern for which the occurrence of wrong reading is the least is set based on the comparison result of the pattern corresponding to the correct-reading character and the pattern acquired from the plurality of signal-waveform information while changing the parameters one by one, the reading accuracy improves automatically even while the bar code reader is being used.

### BRIEF DESCRIPTION OF THE DRAWINGS

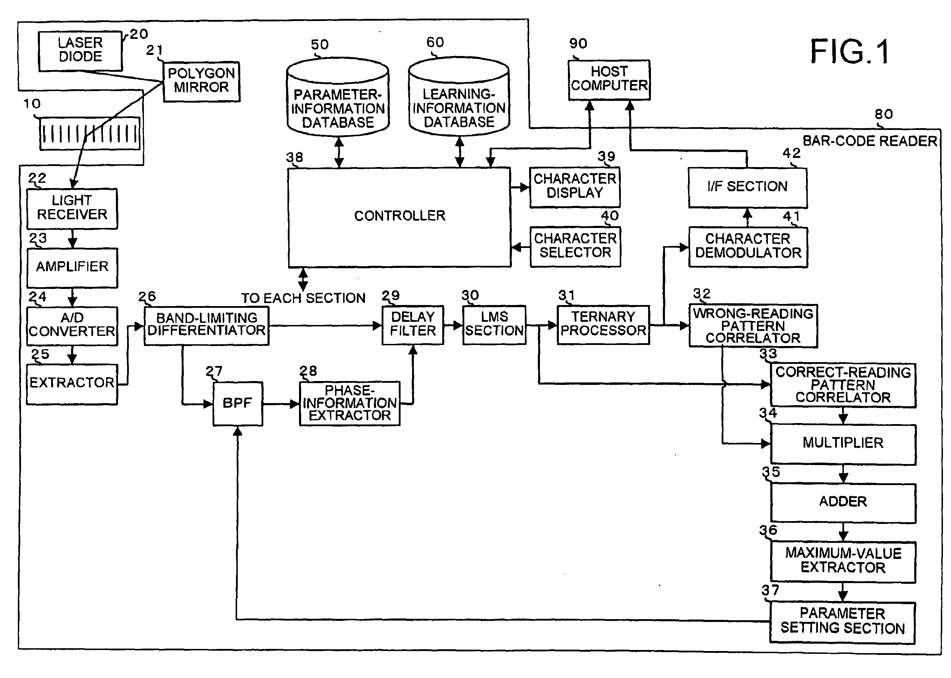

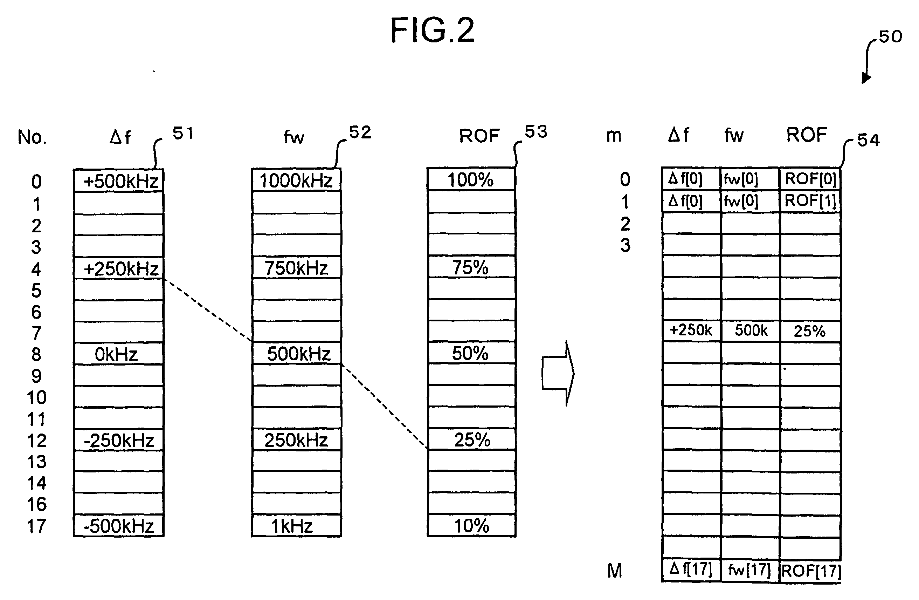

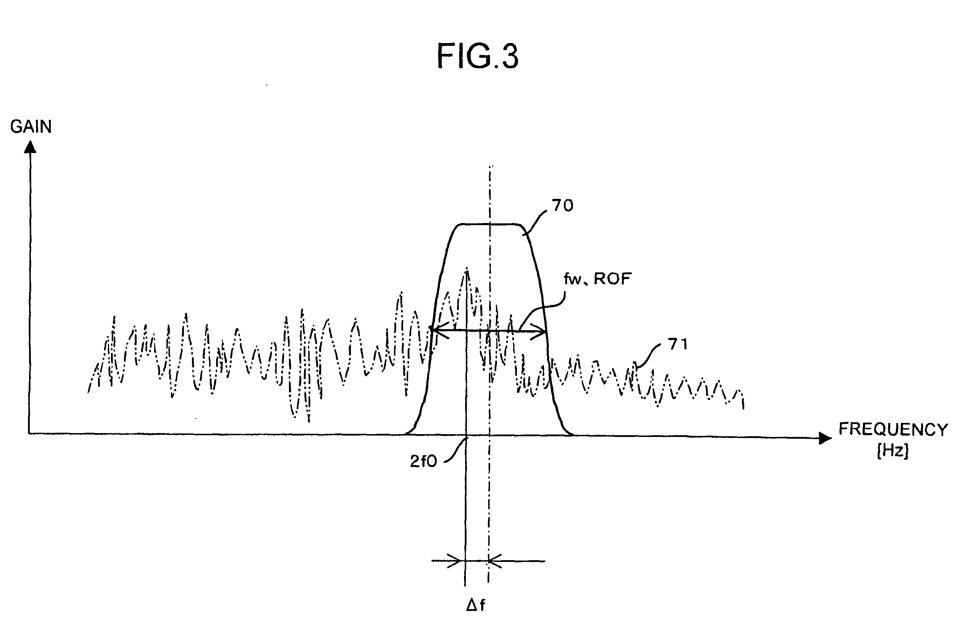

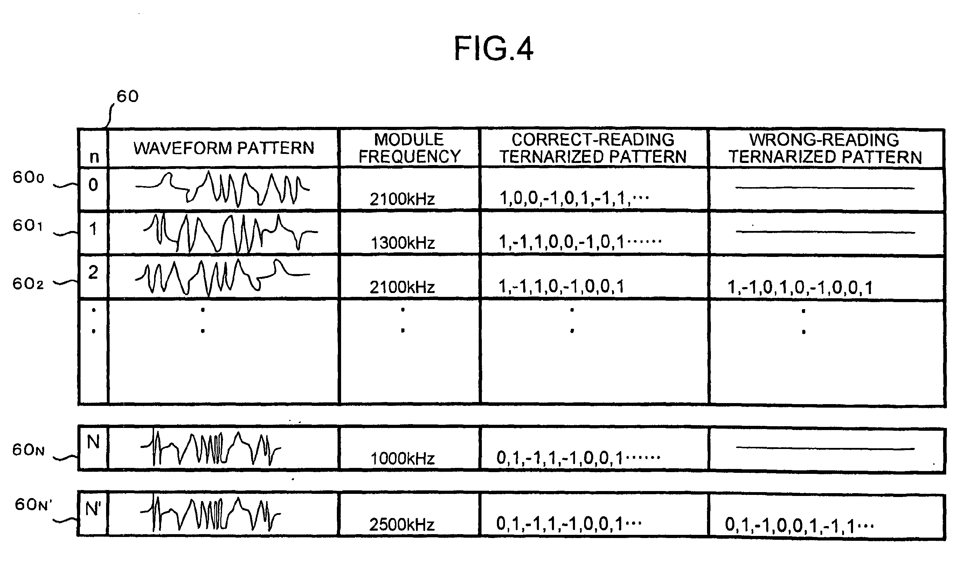

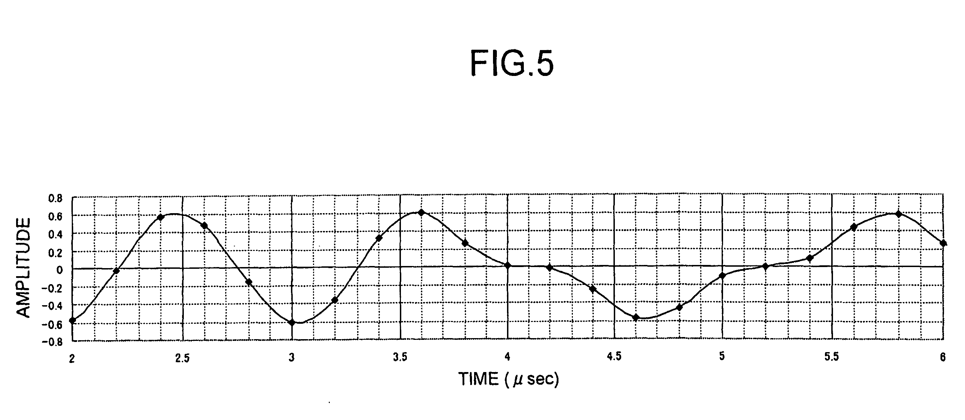

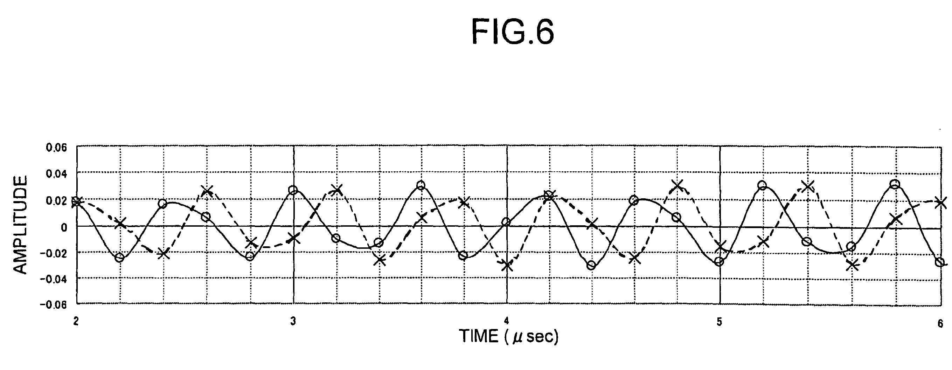

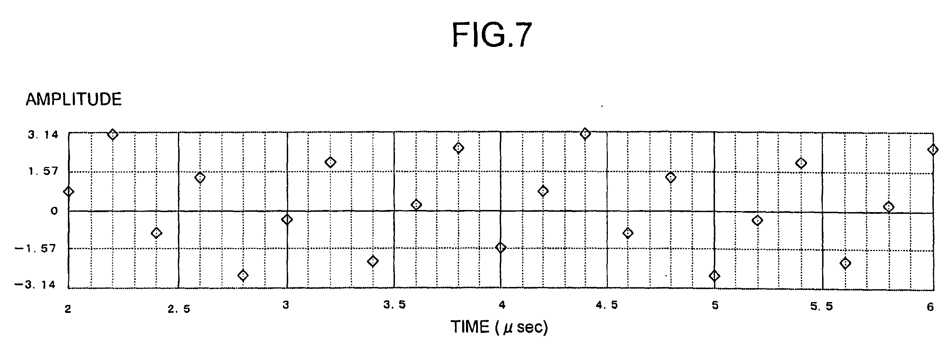

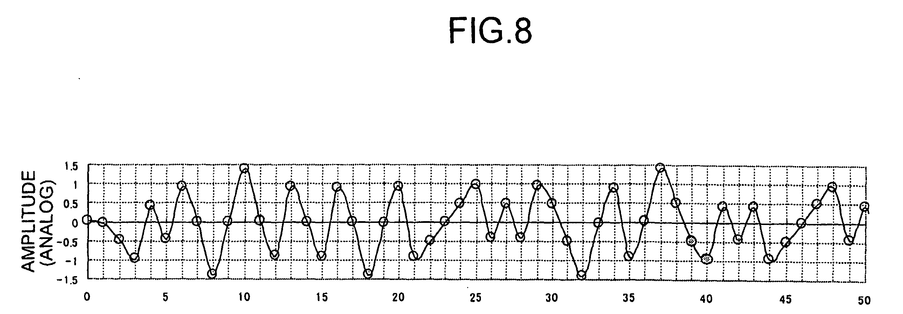

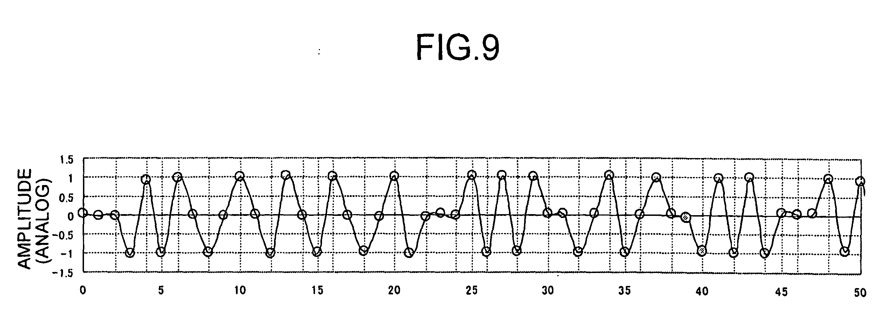

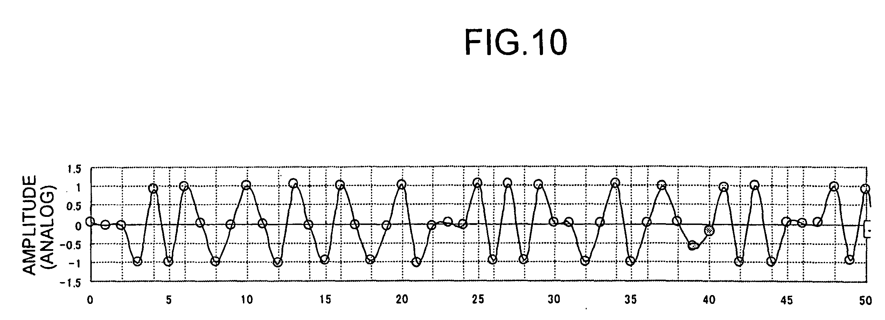

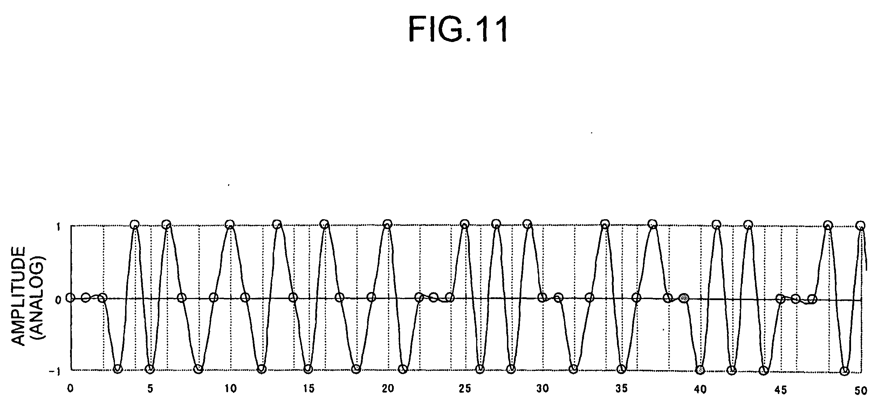

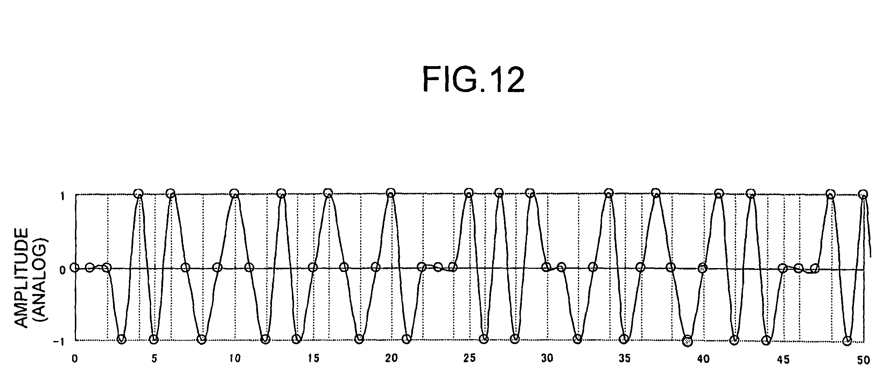

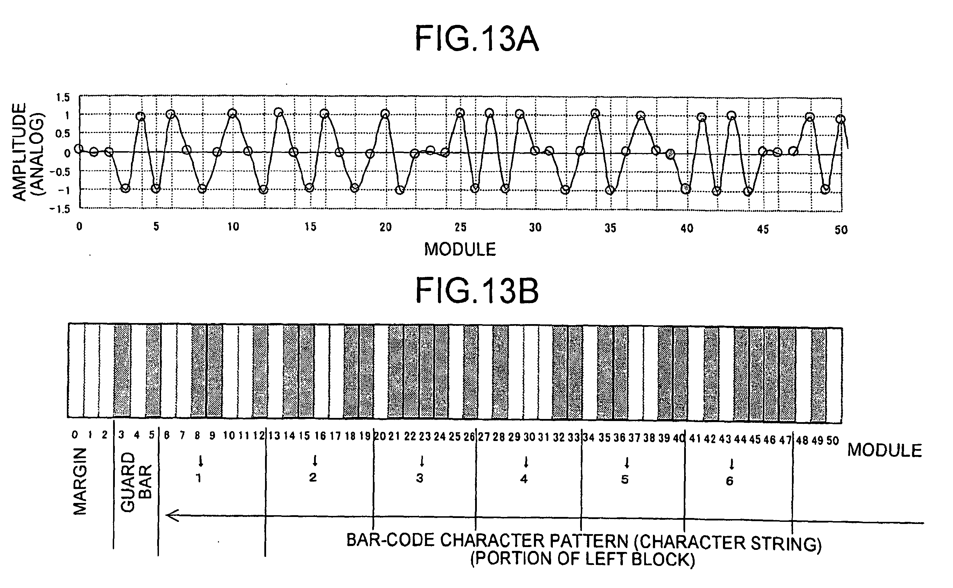

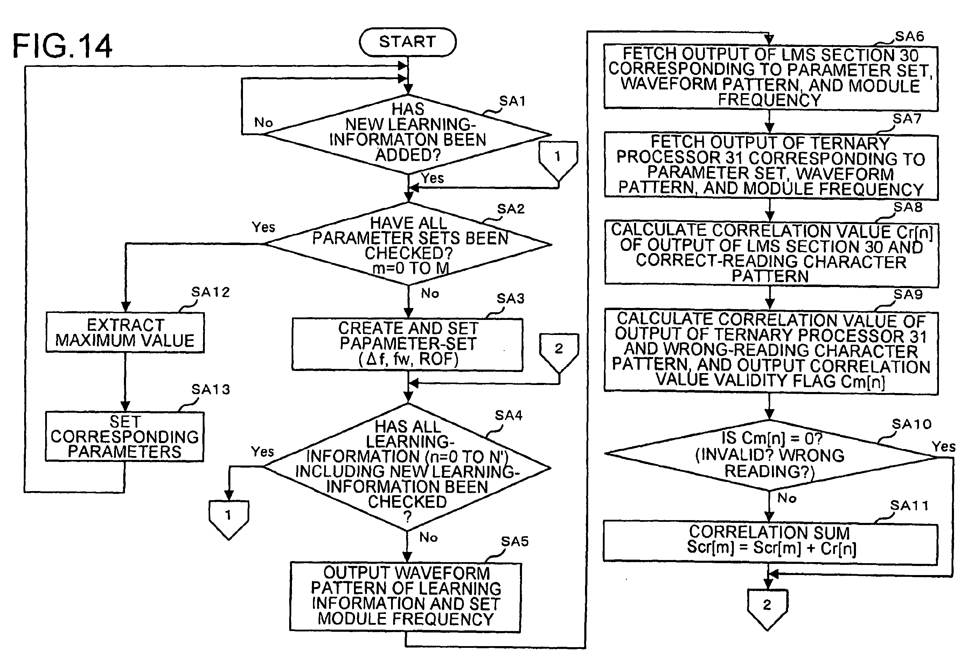

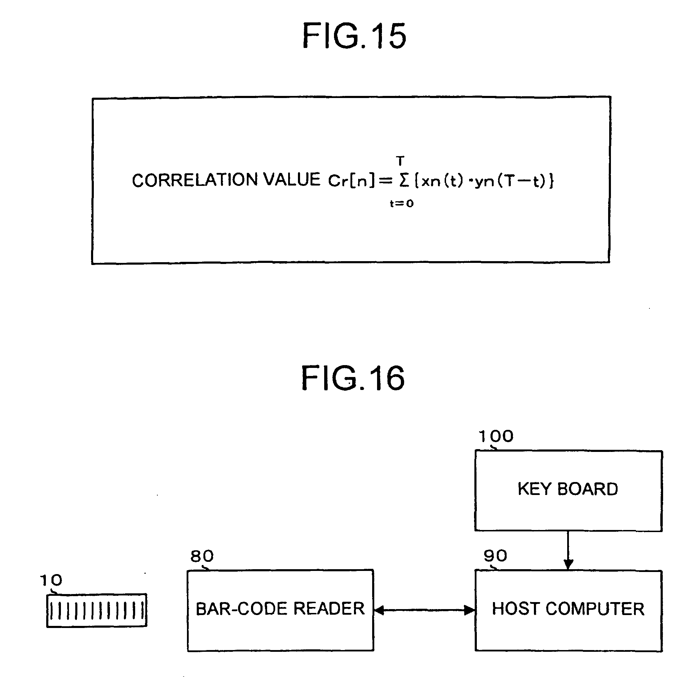

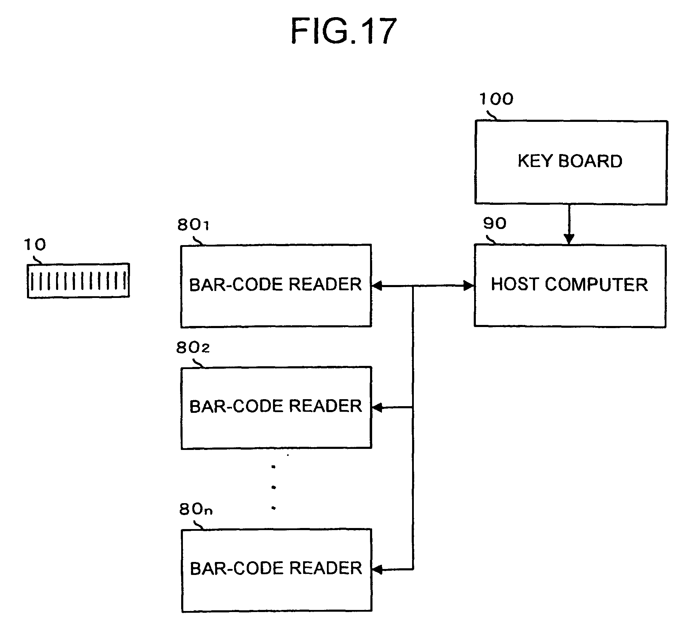

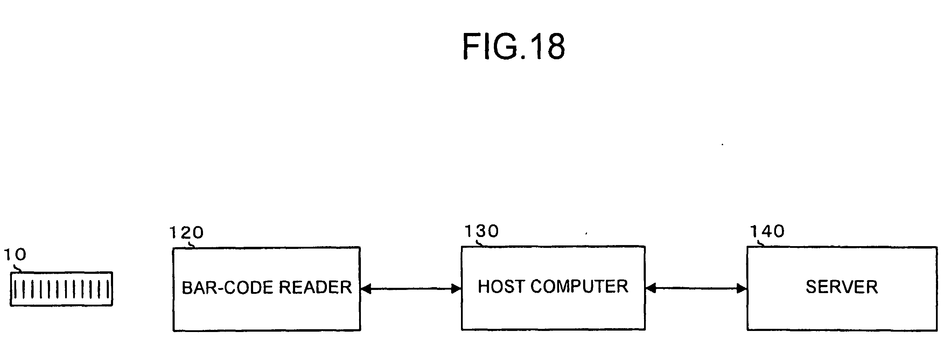

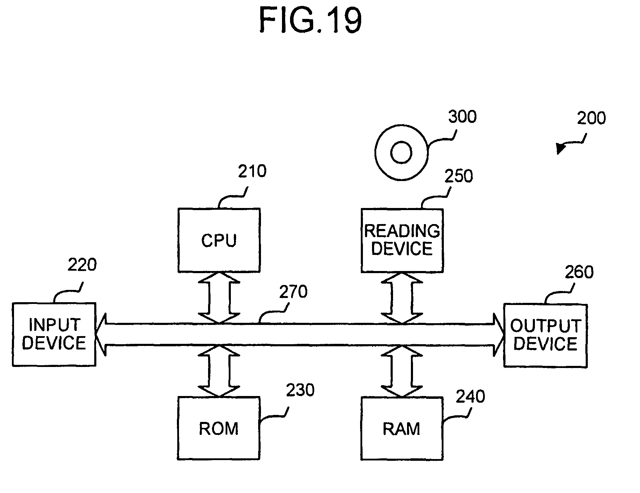

Fig. 1 is block diagram showing a configuration of a first embodiment according to the present invention, Fig. 2 is a diagram showing a parameter-information database 50 shown in Fig. 1, Fig. 3 is a diagram describing parameters in the same first embodiment, Fig. 4 is a diagram showing a learning-information database 60 shown in Fig. 1, Fig. 5 is diagram showing an output of a band-limiting differentiator 26, Fig. 6 is a diagram showing an output of a BPF 27 shown in Fig. 1, Fig. 7 is a diagram showing an output of a phase-information extractor 28 shown in Fig. 1, Fig. 8 is a diagram showing an output of a delay filter 29 shown in Fig. 1, Fig. 9 is diagram showing an output of an LMS section 30 (when reading correctly) shown in Fig. 1, Fig. 10 is a diagram showing an output of an LMS section 30 (when reading wrongly) shown in Fig. 1, Fig. 11 is a diagram showing an output of a ternary processor 31 shown in Fig. 1 and a correct-reading ternarized pattern, Fig. 12 is a diagram showing an output of the ternary processor 31 shown in Fig. 1 and a wrong-reading ternarized pattern, Fig. 13 is a diagram showing a ternarized pattern and a character pattern according to the first embodiment, Fig. 14 is a flow chart describing an operation of the same first embodiment, Fig. 15 is a diagram showing a calculating formula to calculate a correlation value according to the same first embodiment, Fig. 16 is a block diagram showing a configuration of a second embodiment according to the present invention, Fig. 17 is a block diagram showing a configuration of a third embodiment according to the present invention, Fig. 18 is a block diagram of a configuration of a fourth embodiment according to the present invention, and Fig. 19 is a block diagram showing a modified configuration of the first to fourth embodiments according to the present invention.

### BEST MODE FOR CARRYING OUT THE INVENTION

Embodiments 1 to 4 according to the present invention are described below in detail by referring to diagrams.

Fig. 1 is a block diagram showing a configuration of a first embodiment according to the present invention. A bar-code reader 80 shown in this diagram is a reader that reads a bar code 10 optically and sets automatically the most suitable parameters by a learning-function after the shipment.

Here, module frequency error Δf, bandwidth fw, and roll-off factor ROF shown in Fig. 2 and Fig. 3 mentioned later, can be named as the parameters.

In the bar-code reader 80, a laser diode 20 emits a beam light for scanning. A polygon mirror 21 includes a mirror that causes the beam light from the laser diode 20 to reflect, is rotated by a motor (omitted in the diagram), and imparts scanning patterns of a plurality of types by changing a direction of reflection of the beam light.

A beam light that is reflected from the polygon mirror 21 is irradiated on black bars and white bars on the bar code 10, for example from a left end to a right end. A light receiver 22 receives reflected light of the beam light that is irradiated on the bar code 10 and performs photoelectric conversion of amplitude to an electric signal according to an intensity of the light received. An amplifier 23 amplifies the signal subjected to photoelectric conversion by the light receiver 22.

An A/D (Analog/Digital) converter 24 performs digital sampling of an analog signal subjected to photoelectric conversion that is amplified by the amplifier 23 and outputs as a digital signal subjected to photoelectric conversion. An extractor 25 extracts only a signal that is reflected from the bar code 10 from among the signals subjected to photoelectric conversion from the A/D converter 24, to reduce a signal processing in subsequent stages.

A band-limiting differentiator 26 performs processes such as a differentiation process and a squaring process of an output signal of the extractor 25, obtains a frequency spectrum 71 shown in Fig. 3 by an FFT (Fast Fourier Transform) process of a differentiated-squared signal and calculates frequency of a gain peak of the frequency spectrum 71 as a module frequency (2f0) equivalent to a basic module of the bar code.

The band-limiting differentiator 26, by using the abovementioned module frequency, performs a differentiation process for limiting a band of the output signal from the extractor 25 and outputs a signal having a waveform pattern shown in Fig. 5.

A BPF (Band Pass Filter) 27, based on a filter characteristic 70 shown in Fig. 3, performs filtering of the signal of the waveform pattern shown in Fig. 5 and outputs a waveform pattern shown in Fig. 6. In this BPF 27, the module frequency error Δf, the bandwidth fw, and the roll-off factor ROF are set dynamically by a parameter setting section 37 that is mentioned later, as parameters that determine the filter characteristic 70. The parameters are important values, which decide a reading accuracy of the bar code. Therefore, when the parameters are not set to suitable values, an error tends to occur while reading the bar code.

The module frequency error Δf is a value for correcting an error in the module frequency (2f0) that is mentioned later. Therefore, practically, as shown in Fig. 3, a center frequency of the filter characteristic 70 (bandwidth fw) becomes module frequency (2f0) + module frequency error Δf.

Moreover, according to the first embodiment, when there is a wrong reading while reading a bar code, from among sets of a plurality of parameters (refer to Fig. 2), a set for which the wrong reading is the most difficult to occur is selected and parameters corresponding to this set are set in the BPF 27.

In Fig. 6, a waveform in which circles are put at sample points corresponds to a real part where a Hilbert conversion is performed and a waveform in which cross marks are put at sample points corresponds to an imaginary part. Thus, in Fig. 6, each sample point is vectorized (the real part and the imaginary part).

The phase-information extractor 28 extracts a phase of each sampling point in Fig. 6, and letting a point where the phase is zero radian to be a module timing, outputs information of a module timing shown in Fig. 7.

The delay filter 29, based on a delay time of the point of zero radian in Fig. 6 and the sample point, performs delaying process on a signal from the band-limiting differentiator 26 and is a filter for causing the sample point to coincide with the zero radian timing point, and outputs a waveform pattern such as that shown in Fig. 8 for example.

An LMS (Least Mean Square) section 30 performs an equalization process on an output signal from the delay filter 29 by a method of least squares, and outputs a signal of waveform patterns shown in Fig. 9 (when reading correctly) and Fig. 10 (when reading wrongly) for example.

A ternary processor 31, based on a comparison of amplitude and threshold value, ternarizes an output of the LMS section 30 (refer to Fig. 9 and Fig. 10) to any one of "+1", "0" or "-1" and outputs ternarized information of circled portions in Fig. 11 or Fig. 12. For example, ternarized information of the circled portions shown in Fig. 13(a) is demodulated to character pattern (character string) of the bar code shown in Fig. 13 (b) by a character demodulator 41. This character pattern is transmitted as a reading result to a host computer 90 via an I/F (interface) section 42. In Fig. 11, a ternarized pattern when reading correctly is shown. In Fig. 12, a ternarized pattern when reading wrongly is shown. In other words, in Fig. 11, ternarized information of a point with a horizontal co-ordinate = 40 and of a sampling point just before that (a black circle) is "-1" and "0", and is read correctly. Whereas, in Fig. 12, in spite of reading the same bar code, the same sampling points (the black circle) are read wrongly as "0" and "-1".

In the bar-code reader 80 shown in Fig. 1, due to blurring etc. of the bar code, as shown in Fig. 11 and Fig. 12, there is a case where two results (reading correctly and reading wrongly) are obtained as a result of reading one bar code. In such a case, the two results are shown to an operator and the correct result is selected.

A wrong-reading pattern correlator 32 calculates a correlation value of an output of the ternary processor 31 and a wrong-reading ternarized pattern in learning information of a learning-information database 60 that is mentioned later. A correct-reading pattern correlator 33 creates a reference ternarized pattern from the correct-reading character pattern selected by the operator mentioned above and calculates a correlation value of this reference ternarized pattern and the output of the LMS section 30.

A multiplier 34 multiplies the correlation value from the correct-reading pattern correlator 33 and the correlation value from the wrong-reading pattern correlator 32. An adder 35 adds the products for each parameter output by the multiplier 34, to obtain a correlation-sum. A maximum-value extractor 36 extracts a maximum value from among a plurality of correlation-sums calculated.

A parameter setting section 37 sets in the BPF 27, parameters corresponding to the maximum value extracted by the maximum-value extractor 36. A controller 38 controls each section. A character display 39 under a control of the controller 38 displays a bar-code reading result (characters) based on the output of the ternary processor 31.

Here, as shown in Fig. 11 and Fig. 12, when there are the correct-reading result and the wrong-reading result, both the reading results are displayed on the character display 39. A character selector 40 is provided with a function that makes the operator select the correct-reading result when both the reading results are displayed on the character display 39. Concretely, the operator selects that character as the correct-reading result, which coincides with character displayed near the bar code, from among two characters that are displayed on the character display 39.

A parameter-information database 50 is a database that stores parameter information related to the parameters mentioned above (module frequency error Δf, bandwidth fw, and roll-off factor ROF) which affect the reading accuracy of the bar code.

Concretely, the parameter-information database 50, as shown in Fig. 2, includes a module frequency error table 51, a bandwidth table 52, and roll-off factor table 53, and a parameter-set table 54.

The module frequency error table 51 is a set of module frequency errors Δf at a prescribed interval in a prescribed range from a lower limit to an upper limit (for example, from -500 kHz to +500 kHz). The bandwidth table 52 is a set of bandwidths fw in a prescribed range from a lower limit to an upper limit (for example, from 1 kHz to 1000 kHz). The roll-off factor table 53 is a set of roll-off factors in a prescribed range from a lower limit to an upper limit (for example, from 0% to 100%).

The parameter-set table 54 is a set of parameters (module frequency error Δf, bandwidth fw, and roll-off factor ROF) with one parameter each extracted from the module frequency error table 51, the bandwidth table 52, and the roll-off factor table 53. All combinations (m = 0 to M) are stored in the parameter-set table 54.

The learning-information database 60, as shown in Fig. 4, is a database that stores learning information of records from 60₀ to 60_{N'}. This learning information includes number, waveform pattern, module frequency, correct-reading ternarized pattern, and wrong-reading ternarized pattern, and is information, which is used while selecting a parameter that is reset when there is a wrong reading and a plurality of the information is prepared in advance. The waveform pattern is information of a waveform pattern that is input to the band-limiting differentiator 26.

The module frequency is a module frequency corresponding to the concerned waveform pattern. The correct-reading ternarized pattern is an output of the ternary processor 31 (correct reading) when the concerned waveform pattern is input to the band-limiting differentiator 26.

On the other hand, the wrong-reading ternarized pattern is an output (wrong reading) of the ternary processor 31 when the abovementioned pattern is input to the band-limiting differentiator 26. Here, when the bar-code reading result is wrong reading, learning information corresponding to a new concerned reading result is stored in the learning-information database 60.

A host computer 90 is connected to the bar-code reader 80 and is a computer that performs product management etc. based on the bar-code reading result.

Next, an operation of the first embodiment is described while referring to a flow chart shown in Fig. 14. At step SA1 shown in the same diagram, the controller 38 makes a judgment of whether new learning information is added to the learning-information database 60, in this case, a judgment result is "No" and the same judgment is repeated.

Here, a condition for addition of the learning information is that the bar-code reading by the bar-code reader 80 is not possible, or in other words, when there are to types of reading results (correct-reading ternarized pattern and wrong-reading ternarized pattern) (or when the character pattern transmitted from the I/F section 42 is not registered in the host computer 90), the correct-reading is selected by the character selector 40.

When the bar code 10 is held to the beam light by the operator, in the light receiver 22, reflected light from the bar code 10 is received and the photoelectric conversion of amplitude to an electric signal according to the intensity of the light received is performed. The signal subjected to photoelectric conversion upon amplification in the amplifier 23 is digitized in the A/D converter 24 and further extracted in the extractor 25.

Next, the band-limiting differentiator 26 performs processes such as differentiation process and squaring process on the output signal from the extractor 25, obtains a frequency spectrum by the FFT process of the differentiated-squared signal and calculates the frequency of the gain peak of the frequency spectrum as the module frequency (2f0) equivalent to a basic module of the bar code.

Moreover, the band-limiting differentiator 26, by using the abovementioned module frequency, performs the differentiation process for limiting the band of the output signal from the extractor 25 and outputs the signal of the waveform pattern to the BPF 27 and the delay filter 29.

Next, the BPF 27, based on the module frequency (2f0) calculated in the band-limiting differentiator 26 and the parameters set in advance (module frequency error Δf, bandwidth fw, and roll-off factor ROF), performs filtering of the signal of the waveform pattern.

The phase-information extractor 28 extracts a phase of each sampling point in the output of the BPF 27, and letting the point where the phase is zero radian to be the module timing outputs information of the module timing.

Next, the delay filter 29, based on the delay time of the point of zero radian and the sample point, performs delaying process of the signal from the band-limiting differentiator 26, causes the sample point to coincide with the zero radian timing point, and outputs the waveform pattern shown in Fig. 8 to the LMS section 30, for example.

By doing so, the LMS section 30 performs the equalization process on the output signal from the delay filter 29, by a method of least squares. In this case, if the bar code 10 is an inferior bar code, the signal of each waveform pattern shown in Fig. 9 (when reading correctly) and Fig. 10 (when reading wrongly) is output from the LMS section 30.

The ternary processor 31, based on the comparison of amplitude and threshold value, ternarizes the output of the LMS section 30 to any one of "+1", "0", and "-1" and outputs ternarized information of two types for correct reading and wrong reading. In other words, if the bar code 10 is an inferior bar code, to obtain reading results of two types, with the parameters set in the BPF 27 at present, the bar code reader 80 is not able to read.

Due to this, the controller 38 displays the reading results of two types from the ternary processor 31 on the character display 39. The operator makes a judgment of inability to read and selects in the character selector 40 that character as the correct-reading result, which coincides with the character displayed near the bar code, from among the two types of reading results that are displayed on the character display 39.

Next, the controller 38 adds the waveform pattern (the output from the band-limiting differentiator 26), the module frequency (the output from the band-limiting differentiator 26), the correct-reading ternarized pattern (which is output from the ternary processor 31 and is selected in the character selector 40), and the wrong-reading ternarized pattern (which is output from the ternary processor 31 and is selected in the character selector 40) corresponding to the bar code 10, to the record 60_{N'} of the learning-information database 60 as the new learning information as shown in Fig. 4.

By doing so, the controller 38 makes a judgment result at step SA1 shown in Fig. 14 as "Yes". At step SA2, the controller 38, makes a judgment of whether all the parameter sets (m = 0 to M) in the parameter-set table 54 in the parameter-information database 50 shown in Fig. 2 are checked, and in this case the judgment result is "No".

At step SA3, the controller 38 creates one parameter-set (in this case, Δf[0], fw[0], ROF[0]) from the parameter-set table 54. Then, the controller 38 causes the BPF 27 to set this parameter set in the parameter setting section 37.

At step SA4, the controller 38 makes a judgment of whether all the learning information (n = 0 to N') in the learning-information database 60 shown in Fig. 4 is checked for the parameter set created at step SA3.

At step SA5, the controller 38 outputs a waveform pattern in the learning information of the record 60₀ of the learning-information database 60 shown in Fig. 4 to the BPF 27 and the delay filter 29, and sets the module frequency in the BPF 27.

At step SA6, the signal of the waveform pattern is filtered based on the module frequency set at step SA5 and filter characteristics according to the parameters set at step SA3. Then, through the operation mentioned above, the correct-reading pattern correlator 33 fetches the output of the LMS section 30 according to the control of the controller 38.

At step SA7, the wrong-reading pattern correlator 32 fetches the output from the ternary processor 31 according to the control of the controller 38. At step SA8, the controller 38 generates the reference ternarized pattern from the correct-reading character pattern that is selected by the character selector 40 and sets it as the reference ternarized pattern in the correct-reading pattern correlator 33.

According to this, the correct-reading pattern correlator 33 calculates the correlation value Cr[n] of the reference ternarized pattern and the output from the LMS section 30 (refer to Fig. 15). In this correlation value Cr[n], xn(t) corresponds to the output from the LMS section 30 and yn (T-t) corresponds to the reference ternarized pattern.

At step SA9, if there is a wrong-reading ternarized pattern in the learning information (refer to Fig. 4), the controller 38 sets this wrong-reading ternarized pattern in the wrong-reading pattern correlator 32. According to this, the wrong-reading pattern correlator 32 calculates the correlation value of the output of the ternary processor 31 fetched at step SA7 and the abovementioned wrong-reading ternarized pattern, by the calculating formula used in step SA8.

Next, if this correlation value is less than the threshold value, the controller 38 outputs a correlation value validity flag Cm[n] that shows validity of the correlation value from the correct-reading pattern correlator 33 as 1 (valid, correct reading) to the multiplier 34. At step SA10, a judgment of whether the correlation value validity flag Cm[n] is 0 (invalid, wrong reading) is made. In this case, since the correlation value validity flag Cm[n] is 1 (valid, correct reading), a judgment result at step SA10 is "No".

In the multiplier 34, a correlation value Cr[n] from the correct-reading pattern correlator 33 and the correlation value validity flag Cm[n] (=1) are multiplied. At step SA11, the adder 35 adds a correlation-sum Scr[m] related to the parameter set created at step SA3 to the abovementioned correlation value Cr[n] and updates the correlation-sum Scr[m].

On the other hand, if the correlation value exceeds the threshold value at step SA9, the controller 38 outputs the correlation value validity flag Cm[n] as 0 (invalid, wrong reading) to the multiplier 34. At step SA10, since the correlation value validity flag Cm[n] is 0 (invalid, wrong reading), the judgment result is "Yes" and step SA11 is skipped.

Practically, in the multiplier 34, the correlation value Cr[n] from the correct-reading pattern correlator 33 and the correlation value validity flag Cm[n] (=0) are multiplied and the correlation value Cr[n] becomes 0. Therefore, in the adder 35, 0 is added to the correlation-sum Scr[m].

Thus, according to the first embodiment, in a certain parameter set, when a ternarized pattern that has a greater correlation value with the wrong-reading ternarized pattern, is output from the ternary processor 31, the correlation value Cr[n] at step SA8 is let to be 0 and without adding to the correlation-sum Scr[m], the filter set is not let to be selected in an extraction of the maximum value (step SA12) that is mentioned later.

At step SA4, the controller 38 makes a judgment of whether all the learning information (n = 0 to N) in the learning-information database 60 shown in Fig. 4 is checked for the parameter set created at step SA3 and in this case the judgment result is "No".

At step SA5, the controller 38 outputs a waveform pattern in the learning information of a next record 60₁ in the learning-information database 60 shown in Fig. 4 to the BPF 27 and the delay filter 29, as well as sets the module frequency in the BPF 27. After this, from step SA6 onwards, processing of the learning information related to the concerned parameter set is performed.

When processing of the last record 60_{N'} in the learning-information database 60 ends, the controller 38 makes a judgment result at step SA4 as "Yes". In this case, the correlation-sum Scr[m] for the parameter set mentioned above (in this case, Δf[0], fw[0], and ROF[0]) is calculated.

At step SA2, the controller 38 makes a judgment of whether all parameter sets (m = 0 to M) in the parameter-set table 54 in the parameter-information database 50 shown in Fig. 2 are checked, and in this case the judgment result is "No".

At step SA3, the controller 38 creates the next parameter set (in this case, Δf[0], fw[0], and ROF[O]) from the parameter-set table 54. Then, the controller 38 causes the BPF 27 to set this parameter-set in the parameter setting section 3.7. After this, a process of calculating the correlation-sum Scr[m] for the concerned parameter set (Δf[0], fw[0], and ROF[0]) is performed.

Further, when a process of calculating the correlation sum Scr[m] for the last parameter set ends, the controller 38 makes the judgment result at step SA2 as "Yes". At this point, a plurality of correlation-sums Scr[m] corresponding to all parameter sets are calculated.

At step SA12, the maximum-value extractor 36 extracts the maximum value from the plurality of correlation-sums Scr[m]. This maximum correlation-sum Scr[m] has the greatest correlation value with the reference ternarized pattern of correct reading, i.e. it expresses a parameter set for which an occurrence of wrong reading is the least.

At step SA13, the parameter setting section 37 sets a parameter set corresponding to the maximum correlation-sum Scr[m] that is extracted at step SA12 in the BPF 27. According to this, by substituting the parameter set for which the wrong reading has occurred, the bar code is read based on the parameter set mentioned above for which the occurrence of wrong reading is the least.

As explained above, according to the first embodiment, when there is a wrong reading of characters of the bar code, the operator is made to select a correct-reading character from a plurality of characters in the character selector 40 and since the pattern for which the occurrence of wrong reading is the least is set in the BPF 27 based on a comparison result (correlation value) of the correct-reading ternarized pattern corresponding to the correct-reading character and a ternarized pattern that is acquired from a plurality of signal-waveform information while changing the parameters one by one, the reading accuracy can be improved automatically even during the use (after the shipment).

In the first embodiment mentioned above, although the configuration is such that the operator is made to select the correct reading character pattern in the character selector 40 shown in Fig. 1, the configuration may also be made such that the correct reading character pattern is input by a keyboard. An example of such a configuration is described below as a second embodiment.

Fig. 16 is a block diagram showing a configuration of the second embodiment according to the present invention. In this diagram, same reference numerals are used for components corresponding to the components in Fig. 1. In the same diagram, a keyboard 100 is connected to the host computer 90. This keyboard 100 is for direct inputting of a character pattern from the bar code 10 by the operator when there are two types of reading results (correct-reading character pattern and wrong-reading character pattern) when the bar code 10 is read.

In the configuration mentioned above, when there are two types of reading results of the bar code 10, the bar-code reader 80 informs it as a wrong reading to the operator via the host computer 90 (or directly). In accordance with this, the operator inputs a character pattern that is displayed near the bar code 10 by using the keyboard. 100.

The host computer 90 informs the character pattern that is input as the correct-reading character pattern to the bar-code reader 80. After this, the bar-code reader 80 adds the learning information and performs resetting etc. of parameter set in a similar way as according to the first embodiment.

Thus as described above, according to the second embodiment, an effect similar to that according to the first embodiment can be achieved.

Fig. 17 is a block diagram showing a configuration of a third embodiment according to the present invention. In this diagram, same reference numerals are used for components corresponding to the components in Fig. 16. In the same diagram, bar-code readers 80₁ to 80ₙ connected in parallel are provided substituting the bar-code reader 80 shown in Fig. 16. Each of the bar-code readers 80₁ to 80ₙ have same configuration as that of the bar-code reader 80.

In the configuration mentioned above, for example, if there is a wrong reading in the bar-code reader 80₁ and the parameter set is reset, this parameter set is set in parallel in the other bar-code readers 80₂ to 80ₙ.

Thus, as described above, according to the third embodiment, since the parameter setting is performed also in the other bar-code readers 80₂ to 80ₙ which are installed as annex to the bar-code reader 80₁, parameters for which the occurrence of wrong reading is the least can be set promptly in a plurality of bar-code readers, thereby enabling to improve an efficiency.

According to the first embodiment, although the configuration is such that the bar-code reader 80 is provided with functions such as a bar-code reading function, a function of making the operator select the correct-reading character pattern when it is read wrongly, and a function of resetting the parameter set, some functions may also be provided to the host computer.

Fig. 18 is a block diagram of a configuration of a fourth embodiment according to the present invention. In this diagram, a bar-code reader 120 is provided with the bar-code reading function, and the function of resetting the parameter set. A host computer 130 receives a bar-code reading result from the bar-code reader 120 and is provided with the function of making the operator select the correct-reading character pattern when it is read wrongly. A server 140 is provided with the parameter-information database 50 and the learning-information database 60 shown in Fig. 1, and receives a request of referring to a database from the bar-code reader 120 via the host computer 130.

As described above, according to the fourth embodiment, an effect similar to that as in the first embodiment is achieved.

Although the embodiments from the first to the fourth embodiments have been described so far by referring to the diagrams, a concrete example of configuration is not restricted to any of the embodiments from the first to the fourth embodiments and a design modification etc. within a scope that is not deviated from the basic idea of the present invention is included in the present invention.

For example, according to the embodiments from the first to the fourth embodiments, a program for realizing the bar-code reading function mentioned above may be recorded in a computer readable recording medium 300 shown in Fig. 19, the program that is recorded in the recording medium 300 may be caused to be read and realized by a computer 200, thereby realizing each function.

The computer 200 includes a CPU (Central Processing Unit) 210 that runs the abovementioned program, an input device 220 such as a keyboard and a mouse, a ROM (Read Only Memory) 230 that stores various types of data, a RAM (Random Access Memory) 240, a reading device 250 that reads the program from the recording medium 300, an output device 260 such as a display and a printer, and a bus 270 that connects each component of the apparatus.

The CPU 210, run the program after reading the program that is recorded in the recording medium 300 via the reading unit 250, thereby realizing each of the functions mentioned above. An optical disc, a flexible disc, and a hard disc etc. are examples of the recording medium 300.

Thus as described above, according to the present invention, when there is an occurrence of wrong reading of characters of a bar code, the operator is made to select the correct-reading character from the plurality of characters and since the pattern for which the occurrence of wrong reading is the least is set based on the comparison result of the pattern corresponding to the correct-reading character and the pattern that is acquired from the plurality of signal-waveform information while changing the parameters one by one, therefore the reading accuracy can be improved automatically even during the use.

Moreover, according to the present invention, since the pattern corresponding to the correct reading character and the pattern that is acquired from the plurality of signal-waveform information while changing the parameters one by one, are correlated, based on the correlation value, the reading accuracy can be improved automatically even during the use.

Moreover, according to the present invention, since the parameter corresponding to the correlation of the maximum value is set as the parameter for which the occurrence of wrong reading is the least, the reading accuracy can be improved automatically even during the use.

Moreover, according to the present invention, since the parameters are set in the other bar-code readers that are installed as annex, when there is an occurrence of wrong reading in any of the bar-code readers from among the plurality of bar-code readers, parameters for which the occurrence of wrong reading is the least can be set promptly, thereby enabling to improve the efficiency.

### INDUSTRIAL APPLICABILITY

Thus, a bar-code reader according to the present invention is useful for reading bar codes in a field of distribution of products.

## Claims

1. A bar-code reader (80) comprising:
a reading unit (27) that based on parameters reads characters from a bar code (10);
a storage unit (60) that stores a plurality of signal-waveform information corresponding to a plurality of character patterns;
a selecting unit (40) that makes an operator select a correct-reading character from among a plurality of characters when there is an occurrence of wrong reading;
a comparing unit (31) that compares a pattern corresponding to the correct-reading character that is selected and a pattern that is acquired from a plurality of signal-waveform information while changing the parameters one by one; and
a parameter-setting unit (37) that sets in the reading unit (27), the parameters for which the occurrence of wrong reading is least, based on a comparison result of the comparing unit (31).

2. The bar-code reader (80) according to claim 1, wherein the comparing unit (31) correlates the pattern corresponding to the correct-reading character that is selected and the pattern that is acquired from the plurality of signal-waveform information while changing the parameters one by one.

3. The bar-code reader (80) according to claim 2, wherein the parameter-setting unit (37) sets in the reading unit (27), parameters corresponding to a correlation of a maximum value as parameters for which the occurrence of wrong reading is the least.

4. The bar-code reader (80) according to claim 1, wherein the parameter-setting unit (37) sets the parameters in bar-code readers (80₁, 80₂, ... 80ₙ) that are installed as annex.

5. A computer program that makes a computer function as a bar-code reader and makes the computer execute:
reading characters from a bar code, based on parameters;
storing a plurality of signal-waveform information corresponding to a plurality of character patterns;
a selecting that includes making an operator select a correct-reading character from among a plurality of the characters, if there is an occurrence of a wrong reading;
comparing a pattern corresponding to the correct-reading character selected and a pattern acquired from a plurality of signal-waveform information while changing the parameters one by one; and
setting in a reading unit, the parameters for which the occurrence of the wrong reading is least, based on a comparison result of the comparing.
